# EUROPEAN PATENT APPLICATION

(11) **EP 4 848 568 A1**
(43) Date of publication of application: **02.12.2026**
(21) Application number: 26175601.9
(22) Date of filing: 30.04.2026
(51) Int. Cl.: H02P 3/22, H02P 3/04, H02P 3/18

(54) **SERVO DRIVER**

(30) Priority: 26.05.2025 JP 2025087143
(71) Applicant: OMRON Corporation, Kyoto-shi, Kyoto 600-8530 (JP)
(72) Inventor: HIRATA, Taketomo, Kyoto-shi, Kyoto, 600-8530 (JP); ASANO, Megumu, Kyoto-shi, Kyoto, 600-8530 (JP)
(74) Representative: Isarpatent

(57) **Abstract**

To provide a servo driver that can use a dynamic brake resistor until the resistor comes closer to the end of its life. The servo driver is a servo driver that controls a servo motor in a servo system. The servo driver includes a dynamic brake that stops the servo motor by dissipating, as heat in a resistor, regenerative electric power from the servo motor, and an estimation unit that estimates an energy value that will be dissipated as heat in the resistor during use of the dynamic brake, and estimates a remaining number of uses of the dynamic brake based on an accumulated value of the energy value dissipated as heat in the resistor due to use of the dynamic brake so far and an allowable energy value of the resistor.

## Description

### TECHNICAL FIELD

The present invention relates to a servo driver.

### BACKGROUND ART

When a dynamic brake is used, heat generation in a servo motor increases. Therefore, it has been proposed to protect the dynamic brake according to the rotational speed of the servo motor and the use time of the dynamic brake (see Patent Document 1).

### CITATION LIST

### PATENT LITERATURE

Patent Document 1: JP 2002-369564 A

### SUMMARY OF INVENTION

### TECHNICAL PROBLEM

The dynamic brake stops the servo motor by dissipating, as heat in a dynamic brake resistor, the electric power generated by the servo motor. The dynamic brake resistor has a limit on the accumulated energy that can be dissipated as heat. Therefore, a limit is imposed on the number of times the dynamic brake can be used. However, since the energy dissipated as heat in the resistor is not constant for each use of the dynamic brake, dissipation in the resistor may still be possible even after the upper limit of the number of uses has been reached.

One aspect of the disclosed technique is to provide a servo driver that can use a dynamic brake resistor until the resistor comes closer to the end of its life.

### SOLUTION TO PROBLEM

One aspect of the disclosed technique is exemplified by the following servo driver. The servo driver is a servo driver that controls a servo motor in a servo system. The servo driver includes a dynamic brake that stops the servo motor by dissipating, as heat in a resistor, regenerative electric power from the servo motor, and an estimation unit that estimates an energy value that will be dissipated as heat in the resistor during use of the dynamic brake, and estimates a remaining number of uses of the dynamic brake based on an accumulated value of the energy value dissipated as heat in the resistor due to use of the dynamic brake so far and an allowable energy value of the resistor.

The energy dissipated as heat in the resistor during use of the dynamic brake varies depending on the state of the servo motor, and is therefore not constant. The servo driver can estimate the remaining number of uses with higher accuracy by using the accumulated value of the estimated energy value that will be dissipated as heat in the resistor and the allowable energy value. Consequently, the servo driver can use the resistor until the resistor comes closer to the end of its life. Note that the estimation unit may issue an alarm if the remaining number of uses is equal to or less than a threshold value.

The servo driver may further have the following feature. The estimation unit estimates the energy value that will be dissipated as heat in the resistor based on a load inertia and a rotational speed of the servo motor. It is considered that the energy dissipated as heat in the resistor during use of the dynamic brake varies depending on conditions such as the load inertia and the rotational speed of the servo motor. The servo driver can improve the estimation accuracy of the energy value by using the load inertia and the rotational speed.

The servo driver may further have the following feature. The estimation unit calculates a first use count as a deemed number of uses of the resistor by dividing the accumulated value by the allowable energy value, and multiplying a resulting value thereof by a maximum allowable number of uses specified for the resistor, and calculates the remaining number of uses by subtracting the first use count from the maximum allowable number of uses. The servo driver can improve the estimation accuracy of the remaining number of uses by using the accumulated value, the allowable energy value, and the maximum allowable number of uses.

The servo driver may further have the following feature. The estimation unit calculates a first value by subtracting the accumulated value from the allowable energy value, calculates a second value by dividing the accumulated value by a number of uses of the dynamic brake, and calculates the remaining number of uses by dividing the first value by the second value. Examples of the statistical value include an average value and a median value. The servo driver can improve the estimation accuracy of the remaining number of uses by using the statistical value of the energy dissipated as heat in the resistor during use of the dynamic brake in the past.

### ADVANTAGEOUS EFFECTS OF INVENTION

According to the disclosed technique, the dynamic brake resistor can be used until the resistor comes closer to the end of its life.

### BRIEF DESCRIPTION OF DRAWINGS

FIG. 1 is a diagram illustrating an example of a servo system according to an embodiment.
FIG. 2 is a diagram illustrating an example of a processing block of a servo driver according to the embodiment.
FIG. 3 is a diagram illustrating an example of a life curve of a dynamic brake resistor according to the embodiment.
FIG. 4 is a diagram schematically illustrating estimation of a remaining number of uses of the dynamic brake mechanism by an estimation unit of the servo driver according to the embodiment.
FIG. 5 is a diagram illustrating an example of a processing flow of the process of estimating the remaining number of uses of the dynamic brake mechanism by the estimation unit according to the embodiment.

### DESCRIPTION OF EMBODIMENTS

### <Application Example>

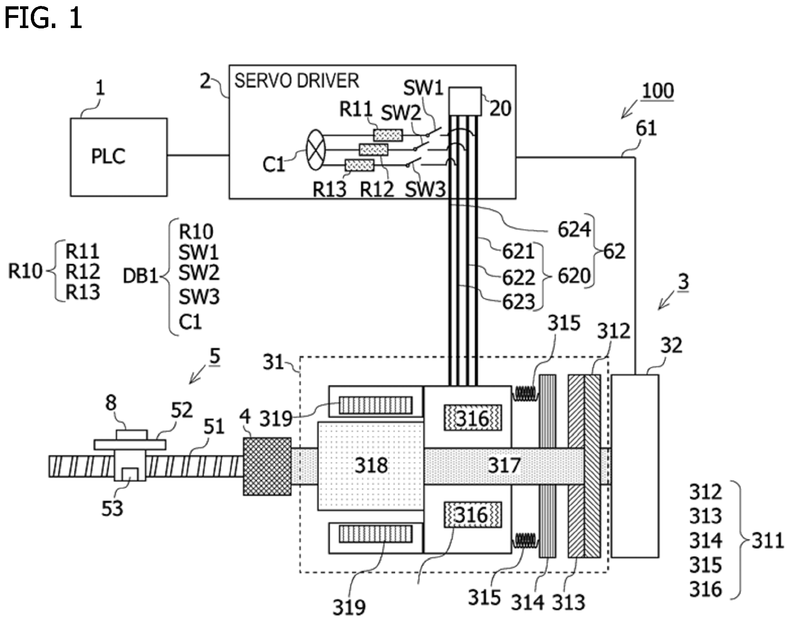

The application example of the present invention is, for example, a servo driver 2 illustrated in FIG. 1. The servo driver 2 includes a dynamic brake mechanism DB1 that stops a servo motor 3 by dissipating, as heat in a dynamic brake resistor R10, regenerative electric power from the servo motor 3. The upper limit value of the accumulated energy that can be dissipated as heat in the dynamic brake resistor R10 is specified by the specifications of the dynamic brake resistor R10.

The servo driver 2 estimates the energy consumed in the dynamic brake resistor R10 during use of the dynamic brake mechanism DB1. Then, the servo driver 2 estimates the remaining number of available uses of the dynamic brake mechanism DB1 based on the accumulated value of the estimated energy and the upper limit value specified by the specifications of the dynamic brake resistor R10. The energy dissipated as heat in the dynamic brake resistor R10 during use of the dynamic brake mechanism DB1 is not constant because it varies depending on the load inertia, the rotational speed of the servo motor 3, and the like. The servo driver 2 can improve the estimation accuracy of the remaining number of uses of the dynamic brake mechanism DB1 by estimating the energy consumed in the dynamic brake resistor R10 during use of the dynamic brake mechanism DB1. Consequently, the servo driver 2 can enable the use of the dynamic brake mechanism DB1 until the accumulated value of the estimated energy becomes close to the upper limit value specified by the specifications of the dynamic brake resistor R10. In other words, the servo driver 2 can use the dynamic brake mechanism DB1 until the dynamic brake resistor R10 comes closer to the end of its life.

### <Embodiments>

An embodiment is described below with reference to the drawings. FIG. 1 is a diagram illustrating an example of a servo system 100 according to the embodiment. The servo system 100 includes a PLC1, the servo driver 2, and the servo motor 3. A load 5 is connected to a motor shaft 317 of the servo motor 3 via a coupling 4. The servo system 100 is a system that drives the load 5 by the servo motor 3 being servo-controlled by the servo driver 2.

The load 5 includes a threaded shaft 51, a precision stage 52, and an external brake 53. The precision stage 52 is disposed on the threaded shaft 51. The precision stage 52 is displaced on the threaded shaft 51 by the drive of the servo motor 3. Stoppers (not illustrated) are provided at both ends of the drive range of the precision stage 52 along the threaded shaft 51. The impact when the precision stage 52 contacts the stopper is reduced as much as possible by the torque control of the servo motor 3. A workpiece 8 is placed on the precision stage 52. In this manner, in the servo system 100 illustrated in FIG. 1, one drive shaft of the servo motor 3 is provided, but two or more drive shafts may be provided.

In addition, the precision stage 52 is fixed so as not to be displaced on the threaded shaft 51 when the external brake 53 is locked. As a result, the motor shaft 317 of the servo motor 3 is also stopped. The holding force of the external brake 53 (the force for fixing the precision stage 52 to the threaded shaft 51) is set to be larger than the instantaneous maximum torque of the servo motor 3, for example. Therefore, when the external brake 53 is locked, the precision stage 52 is not displaced on the threaded shaft 51 even if the servo motor 3 rotates. In addition, the precision stage 52 becomes displaceable on the threaded shaft 51 when the external brake 53 is turned off.

The PLC 1 outputs a command signal to the servo driver 2. The PLC 1 functions as, for example, a device that monitors the servo driver 2 by performing processing according to a program prepared in advance.

Then, the servo driver 2 receives a command signal from the PLC 1. Further, the servo driver 2 receives a feedback signal from the servo motor 3. The servo driver 2 supplies electric power from a predetermined power supply circuit 20 to the servo motor 3 via an electric power line 62. The servo driver 2 includes a servo system that performs feedback control individually using a position controller, a speed controller, a current controller, and the like, and performs servo-control and drive of the servo motor 3 using these controllers.

The servo motor 3 includes a motor body 31 and an encoder 32. The servo motor 3 is, for example, an AC servo motor. The servo motor 3 and the servo driver 2 are connected by an encoder cable 61 and the electric power line 62. The electric power line 62 includes a power line 620 and a brake line 624. The power line 620 includes a U-phase power line 621, a V-phase power line 622, and a W-phase power line 623. The power line 620 is an electric wire used for supplying drive electric power from the servo driver 2 to the servo motor 3. In the power line 620, the U-phase electric power is supplied by the U-phase power line 621, the V-phase electric power is supplied by the V-phase power line 622, and the W-phase electric power is supplied by the W-phase power line 623. The brake line 624 is an electric wire used for supplying electric power used for releasing a non-excitation-actuated electromagnetic brake 311 from the servo driver 2 to the servo motor 3.

The servo motor 3 receives a drive current from the servo driver 2 via the power line 620. A stator 319 of the servo motor 3 is provided for each of the U phase, the V phase, and the W phase, and generates a magnetic field using the supplied drive current. A rotor 318 of the servo motor 3 receives a magnetic field from the stator 319 to rotate the motor shaft 317. The encoder 32 detects displacement of the motor shaft 317. Examples of the displacement of the motor shaft 317 detected by the encoder 32 include a rotation direction, a rotation amount, and a rotational speed of the motor shaft 317. The encoder 32 outputs a feedback signal indicating the detected displacement to the servo driver 2 via the encoder cable 61.

The servo motor 3 also has the non-excitation-actuated electromagnetic brake 311 as a mechanism for stopping the motor shaft 317. The non-excitation-actuated electromagnetic brake 311 includes a hub 312, a brake lining 313, a movable iron core 314, a spring 315, and an electromagnetic coil 316. When the non-excitation-actuated electromagnetic brake 311 is not receiving power from the servo driver 2 via the brake line 624, the movable iron core 314 is not attracted to the electromagnetic coil 316 because the magnetic field is not generated by the electromagnetic coil 316. Therefore, the movable iron core 314 is pressed against the brake lining 313 by the elastic force of the spring 315. As a result, the brake lining 313 is sandwiched between the hub 312 and the movable iron core 314, and the rotation of the motor shaft 317 is stopped.

When the servo motor 3 receives power from the servo driver 2 via the brake line 624, the electromagnetic coil 316 generates a magnetic field. The movable iron core 314 is separated from the brake lining 313 by being attracted to the electromagnetic coil 316 by the magnetic force of the electromagnetic coil 316. As a result, the motor shaft 317 is free to rotate, and the motor shaft 317 rotates in accordance with the drive current from the servo driver 2. That is, in the non-excitation-actuated electromagnetic brake 311, the brake is locked when power is not received from the servo driver 2 via the brake line 624. In addition, in the non-excitation-actuated electromagnetic brake 311, the brake is released when power is received from the servo driver 2 via the brake line 624.

In addition, the servo driver 2 can also stop the motor shaft 317 by the dynamic brake mechanism DB1. The dynamic brake mechanism DB1 includes the dynamic brake resistor R10, a U-phase switch SW1, a V-phase switch SW2, a W-phase switch SW3, and a closed circuit C1. The dynamic brake resistor R10 includes a U-phase resistor R11 provided in the U phase, a V-phase resistor R12 provided in the V phase, and a W-phase resistor R13 provided in the W phase. When the dynamic brake mechanism DB1 is used, the servo driver 2 turns on the U-phase switch SW1 provided in the U-phase, the V-phase switch SW2 provided in the V-phase, and the W-phase switch SW3 provided in the W-phase, and forms a closed circuit including the U-phase resistor R11, the V-phase resistor R12, the W-phase resistor R13, and the closed circuit C1. Then, the dynamic brake mechanism DB1 stops the motor shaft 317 by dissipating, as heat in the dynamic brake resistor R10, the electric power generated by the rotation of the motor shaft 317. In order to protect the dynamic brake resistor R10 and the stator 319, the frequency of use of the dynamic brake mechanism DB1 is limited. The frequency of use of the dynamic brake mechanism DB1 is limited, for example, to less than once per few minutes. The dynamic brake mechanism DB1 is an example of a "dynamic brake".

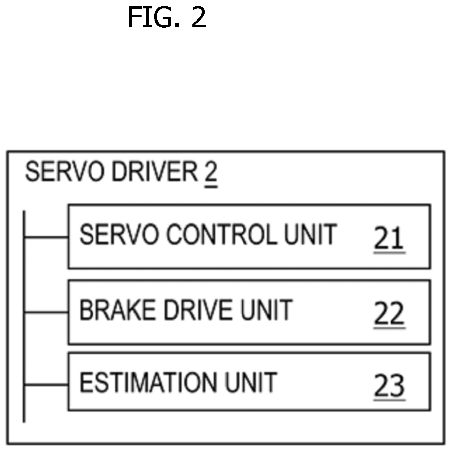

The servo driver 2 can be considered as an information processing device including a processor and a memory. FIG. 2 is a diagram illustrating an example of a processing block of the servo driver 2 according to the embodiment. The servo driver 2 includes a servo control unit 21, a brake drive unit 22, and an estimation unit 23. The servo driver 2 realizes each processing block such as the servo control unit 21, the brake drive unit 22, and the estimation unit 23 illustrated in FIG. 2 by the processor executing a program stored in the memory.

The servo control unit 21 servo-controls the servo motor 3 by using the servo system that performs feedback control using the position controller, the speed controller, the current controller, and the like based on the command signal from the PLC1 and the feedback signal from the servo motor 3.

The brake drive unit 22 stops the servo motor 3 by using the brake instructed by the PLC1 among the external brake 53, the non-excitation-actuated electromagnetic brake 311, and the dynamic brake mechanism DB1. For example, in response to an emergency stop command from the PLC1, the brake drive unit 22 stops the servo motor 3 using the dynamic brake mechanism DB1.

The estimation unit 23 estimates the life of the dynamic brake mechanism DB1. As described above, the dynamic brake mechanism DB1 stops the motor shaft 317 by dissipating, as heat in the dynamic brake resistor R10, the electric power generated by the rotation of the motor shaft 317. The life of the dynamic brake resistor R10 can be estimated by the energy dissipated as heat in the dynamic brake resistor R10. Therefore, it can be said that the life of the dynamic brake mechanism DB1 can also be estimated by the energy dissipated as heat in the dynamic brake resistor R10. In the present embodiment, it is assumed that the estimation unit 23 estimates the remaining number of available uses (remaining number of uses) of the dynamic brake mechanism DB1 as the life of the dynamic brake mechanism DB1. Here, first, selection of the dynamic brake resistor R10 that satisfies the allowable number of uses of the dynamic brake mechanism DB1, specified by the specifications of the servo driver 2, will be described. Next, a method of estimating the remaining number of uses of the dynamic brake mechanism DB1 using the selected dynamic brake resistor R10 will be described.

### (Selection of Dynamic Brake Resistor R10)

The number of times that the current can be passed through the dynamic brake resistor R10 is specified, for example, by the life curve of the dynamic brake resistor R10. The life curve is different for each product of the dynamic brake resistor R10. The life curve is therefore provided, for example, by the manufacturer of the dynamic brake resistor R10 for each product of the dynamic brake resistor R10. In the life curve, the temperature of the dynamic brake resistor R10 through which the current has been passed is associated with the number of times that the current can be passed through the dynamic brake resistor R10.

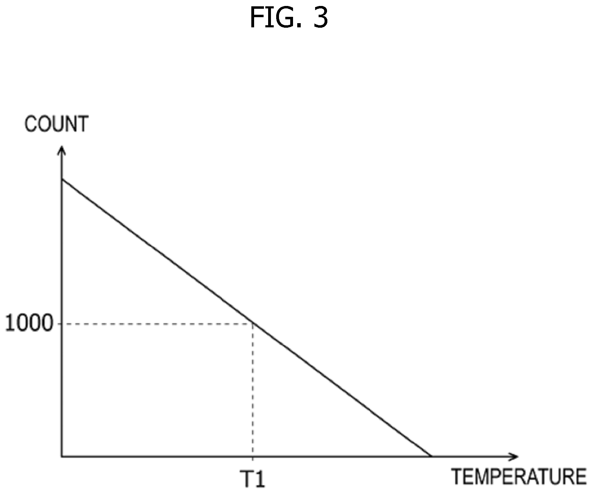

FIG. 3 is a diagram illustrating an example of a life curve of the dynamic brake resistor R10 according to the embodiment. The life curve illustrated in FIG. 3 illustrates the relationship between the temperature of the dynamic brake resistor R10 and the number of times that the current can be passed through the dynamic brake resistor R10. The vertical axis of FIG. 3 illustrates the use count in the dynamic brake mechanism DB1. The horizontal axis illustrates the temperature obtained by adding the surrounding temperature to the temperature of the dynamic brake resistor R10 through which the current has been passed. For example, when the number of times that the current can be passed through the dynamic brake resistor R10, that is, the allowable number of uses (the upper limit of the number of available uses) of the dynamic brake mechanism DB1 is specified as 1000, it can be understood that the temperature of the dynamic brake resistor R10 when the current is passed through the dynamic brake resistor R10 is equal to or lower than the temperature T1. Referring to the life curve illustrated in FIG. 3, it can be understood that the lower the temperature of the dynamic brake resistor R10, the greater the number of times that the current can be passed through the dynamic brake resistor R10.

Here, an example of a method of selecting the dynamic brake resistor R10 will be described. The dynamic brake resistor R10 is selected so as to satisfy the allowable number of uses of the dynamic brake mechanism DB1, specified by the specifications of the servo driver 2. In the present embodiment, for example, the allowable number of uses of the dynamic brake mechanism DB1 is assumed to be 1000. As described above, the life of the dynamic brake resistor R10 depends on the temperature of the dynamic brake resistor R10 through which the current has been passed. Further, the temperature of the dynamic brake resistor R10 depends on the rotational energy of the motor shaft 317 stopped by the dynamic brake mechanism DB1. The rotational energy of the motor shaft 317 when the servo motor 3 is driven at the rated rotational speed with an applied load inertia is determined by, for example, the following Equation (1). Note that the applied load inertia is, for example, the upper limit of the allowable load inertia specified for the servo motor 3.
<Equation 1> ${E}_{max 1} ≡ \frac{1}{2} {I}_{max} {ω}_{T}^{2}$ EQUATION (1)

In Equation (1), Eₘₐₓ₁ (J) is the rotational energy of the motor shaft 317 at the rated rotational speed with the applied load inertia, and Iₘₐₓ is the applied load inertia (Kgm²), and ω_{T} is the rotational speed (rad/s) of the motor shaft 317 when the servo motor 3 is driven at the rated rotational speed. The rotational energy Eₘₐₓ₁ (J) of the motor shaft 317 can be considered as energy consumed in the dynamic brake resistor R10 when the dynamic brake mechanism DB1 is used once with the maximum load within the rating applied to the servo motor 3. Further, the temperature rise value of the dynamic brake resistor R10 when the dynamic brake mechanism DB1 is used once is determined by, for example, the following Equation (2).
<Equation 2> $Δ T = {E}_{max 1} \times 0.24 / c / ρ$ EQUATION (2)

In Equation (2), ΔT (K) is the temperature rise vale of the dynamic brake resistor R10 when the dynamic brake mechanism DB1 is used once, c is the specific heat capacity of the material (J/gK), and ρ is the linear weight (g). Eₘₐₓ₁ (J) in Equation (2) is the same as in Equation (1). Here, 0.24, the specific heat capacity of the material c, and the linear weight ρ are fixed values according to the dynamic brake resistor R10. Then, with reference to the life curve illustrated in FIG. 3, based on ΔT calculated by Equation (2), the dynamic brake resistor R10 is selected that satisfies the allowable number of uses of the dynamic brake mechanism DB1, which is determined by the specifications of the servo driver 2.

The integrated value of the allowable rotational energy of the selected dynamic brake resistor R10 is calculated by multiplying the energy E₁ (J) corresponding to one use of the dynamic brake mechanism DB1 determined by Equation (1) by the allowable number of uses.

### (Estimation of Remaining Number of Uses of Dynamic Brake Mechanism DB1 by Estimation Unit 23)

The estimation unit 23 estimates the remaining number of uses of the dynamic brake mechanism DB1 including the dynamic brake resistor R10 selected in this manner. The estimation unit 23, for example, integrates the rotational energy during use of the dynamic brake mechanism DB1, and estimates the use count indicating the number of uses of the dynamic brake mechanism DB1 so far based on the integrated rotational energy and the rotational energy corresponding to the allowable number of uses (corresponding to 1000, for example). Since the use count of the dynamic brake mechanism DB1 estimated by the estimation unit 23 may not match the actual number of uses of the dynamic brake mechanism DB1, the use count of the dynamic brake mechanism DB1 estimated by the estimation unit 23 is also referred to as a "deemed use count". Then, the estimation unit 23 subtracts the deemed use count of the dynamic brake mechanism DB1 from the allowable number of uses to estimate the remaining number of uses of the dynamic brake mechanism DB1. The estimation unit 23 can estimate the remaining number of uses of the dynamic brake mechanism DB1 using, for example, the following Equation (3), Equation (4), and Equation (5). <Equation 3> $\begin{matrix}{E}_{1} = \frac{1}{2} I {ω}^{2} EQUATION \left(3\right) \\ {U}_{E} = {U}_{max} \times \left({E}_{sum}/{E}_{max}\right) EQUATION \left(4\right) \\ {U}_{r} = {U}_{max} - {U}_{E} EQUATION \left(5\right)\end{matrix}$

In Equation (3), the energy consumed in the dynamic brake resistor R10 when the motor shaft 317 is stopped by the dynamic brake mechanism DB1 is calculated. E₁ is energy (J) consumed in the dynamic brake resistor R10, I is the load inertia (Kgm²), and ω is the rotational speed (rad/s) of the motor shaft 317. The load inertia I is estimated by the servo driver 2 based on, for example, a feedback signal received from the encoder 32. The rotational speed ω is acquired from a feedback signal received from the encoder 32. That is, Equation (3) is different from Equation (1) in that the calculation is performed according to the actual driving state of the servo motor 3. The estimation unit 23 stores the energy E₁ consumed in the dynamic brake resistor R10 calculated using Equation (3) in the memory of the servo driver 2.

In Equation (4), the deemed use count of the dynamic brake mechanism DB1 is calculated. In Equation (4), U_{E} is the deemed use count of the dynamic brake mechanism DB1, Uₘₐₓ is the allowable number of uses of the dynamic brake mechanism DB1, Eₛᵤₘ is the integrated value (integral, for example) of the energy E₁ consumed in the dynamic brake resistor R10 due to the use of the dynamic brake mechanism DB1 so far, and Eₘₐₓ is the integrated value (accumulated value) of the allowable rotational energy of the dynamic brake resistor R10. In the present embodiment, the estimation unit 23 calculates the deemed use count of the dynamic brake mechanism DB1 based on the energy consumed in the dynamic brake resistor R10 and the integrated value of the allowable rotational energy of the dynamic brake resistor R10.

In Equation (5), the remaining number of uses of the dynamic brake mechanism DB1 is estimated. In Equation (5), Uᵣ is the remaining number of uses of the dynamic brake mechanism DB1. Uₘₐₓ and U_{E} are the same as in Equation (4). The estimation unit 23 estimates the remaining number of uses of the dynamic brake mechanism DB1 by subtracting U_{E}, which is the deemed number of uses of the dynamic brake mechanism DB1, from the allowable number of uses of the dynamic brake mechanism DB1 Uₘₐₓ. The estimation unit 23 may issue an alarm if the estimated remaining number of uses Uᵣ becomes "0", for example. In addition, the estimation unit 23 may issue an alarm if the estimated remaining number of uses Uᵣ becomes equal to or less than a threshold value, for example. In addition, the estimation unit 23 may issue an alarm if the difference between the integrated value Eₛᵤₘ of the energy E₁ and the integrated value Eₘₐₓ of the allowable rotational energy of the dynamic brake resistor R10 becomes equal to or less than a predetermined threshold value.

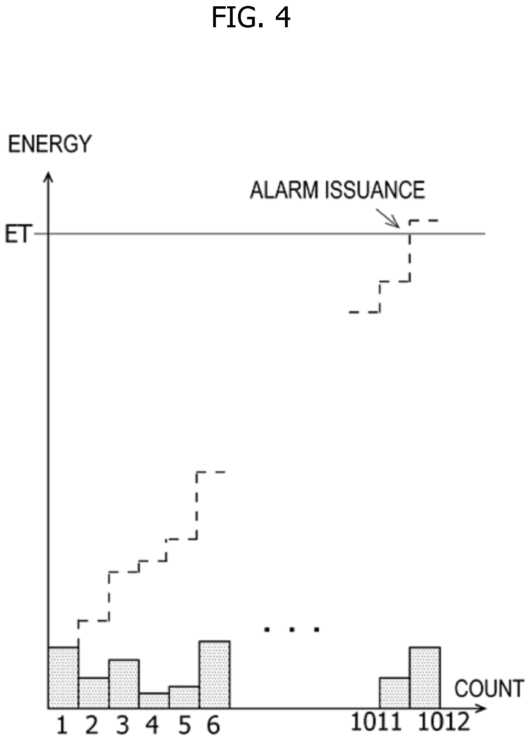

FIG. 4 is a diagram schematically illustrating estimation of the remaining number of uses of the dynamic brake mechanism DB1 by the estimation unit 23 of the servo driver 2 according to the embodiment. The vertical axis of FIG. 4 illustrates the energy consumed in the dynamic brake resistor R10. The horizontal axis of FIG. 4 illustrates the number of uses of the dynamic brake mechanism DB1. Here, the horizontal axis of FIG. 4 illustrates the actual number of uses of the dynamic brake mechanism DB1, rather than the number of uses of the dynamic brake mechanism DB1 estimated by the estimation unit 23. Each of the rectangles in FIG. 4 illustrates the energy consumed in the dynamic brake resistor R10 when the dynamic brake mechanism DB1 is used once. That is, each of the rectangles in FIG. 4 corresponds to E₁ in Equation (3). The broken line in FIG. 4 indicates the integrated value of energy consumed in the dynamic brake resistor R10 due to the use of the dynamic brake mechanism DB1 so far. That is, the broken line in FIG. 4 corresponds to Eₛᵤₘ in Equation (4). Further, "ET" in FIG. 4 illustrates an integrated value of the allowable rotational energy of the dynamic brake resistor R10.

As can be understood with reference to FIG. 4, the energy consumed in the dynamic brake resistor R10 due to the use of the dynamic brake mechanism DB1 is not constant. Therefore, in a case where the remaining number of uses of the dynamic brake mechanism DB1 is estimated based on the use count of the dynamic brake mechanism DB1 (the number of times that the current is passed through the dynamic brake resistor R10 by turning on the U-phase switch SW1, the V-phase switch SW2, and the W-phase switch SW3), in order to secure a design margin, the energy consumed in the dynamic brake resistor R10 per use of the dynamic brake mechanism DB1 is deliberately overestimated. Therefore, there is a possibility that the remaining number of uses of the dynamic brake mechanism DB1 is set to "0" even though the dynamic brake mechanism DB1 can still be used.

In the present embodiment, the remaining number of uses of the dynamic brake mechanism DB1 is estimated based on the integrated (accumulated) energy consumed in the dynamic brake resistor R10 for each use of the dynamic brake resistor R10 and the integrated value of the allowable rotational energy of the dynamic brake resistor R10. Therefore, it is possible to prevent the dynamic brake mechanism DB1 from being determined to be unusable even though the dynamic brake mechanism DB1 can still be used. Then, the estimation unit 23 may issue an alarm if the estimated remaining number of uses becomes "0" or less.

### (Example of Estimation by Estimation Unit 23)

Here, an example of the estimation of the remaining number of uses of the dynamic brake mechanism DB1 by the estimation unit 23 will be described. First, when the applied load inertia (including the rotor inertia) is 98.4042 × 10⁻⁴ (Kgm²) and the rated rotational speed of the servo motor 3 is 100 (rad/s), 49.02 (J) is obtained from Equation (1). Further, when the material of the dynamic brake resistor R10 has a specific heat capacity of 0.199 (J/gK) and the linear weight ρ is 0.67 (g), the temperature rise in the dynamic brake resistor R10 when the dynamic brake mechanism DB1 is used is 88°C from Equation (2). Here, a temperature rise of 88°C in the dynamic brake resistor R10 is assumed to withstand 1000 uses of the dynamic brake mechanism DB1 specified as the allowable number of uses based on the life curve. Since the maximum energy consumed in the dynamic brake resistor R10 when the dynamic brake mechanism DB1 is used once is 49.02 (J) and the allowable number of uses is 1000, the integrated value Eₘₐₓ of the allowable rotational energy of the dynamic brake resistor R10 is 49.02 × 1000 = 49020 (J).

When the integrated value Eₛᵤₘ of the energy E₁ consumed in the dynamic brake resistor R10 is 4902 (J), the estimation unit 23 assumes that the dynamic brake mechanism DB1 has been used 100 times from Equation (4). Then, the estimation unit 23 determines that the remaining number of uses of the dynamic brake mechanism DB1 is 900, which is obtained by subtracting 100 as the deemed number of uses from 1000 as the allowable number of uses.

### <Processing Flow>

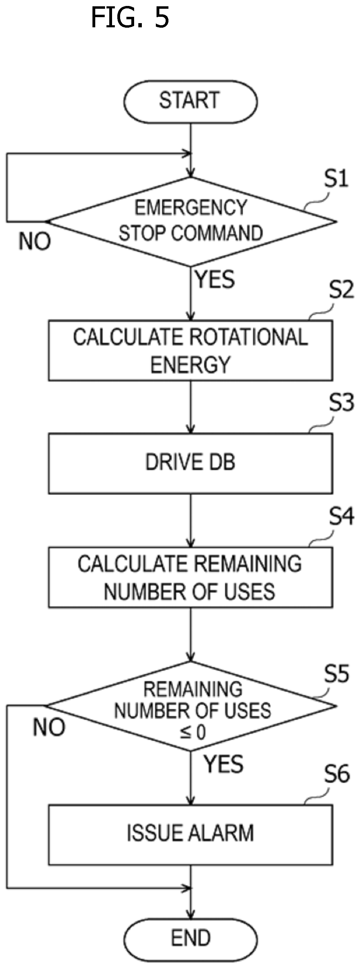

FIG. 5 is a diagram illustrating an example of a processing flow of the process of estimating the remaining number of uses of the dynamic brake mechanism DB1 by the estimation unit 23 according to the embodiment. Hereinafter, an example of the processing flow of the process of estimating the remaining number of uses of the dynamic brake mechanism DB1 by the estimation unit 23 will be described with reference to FIG. 4.

In step S1, the servo control unit 21 determines whether or not an emergency stop command has been received from the PLC1. If an emergency stop command has been received (YES in step S1), the process proceeds to step S2. If an emergency stop command has not been received (NO in step S1), the process of step S1 is repeated.

In step S2, the estimation unit 23 calculates the rotational energy of the motor shaft 317 of the servo motor 3. The estimation unit 23 calculates the energy E₁ of the motor shaft 317 using, for example, Equation (3). The estimation unit 23 stores the calculated rotational energy in the memory of the servo driver 2.

In step S3, the brake drive unit 22 drives the dynamic brake mechanism DB1 and stops the motor shaft 317 of the servo motor 3.

In step S4, the estimation unit 23 estimates the remaining number of uses of the dynamic brake mechanism DB1. The estimation unit 23 estimates the remaining number of uses of the dynamic brake mechanism DB1 using, for example, Equation (4) and Equation (5).

In step S5, the estimation unit 23 determines whether or not the remaining number of uses estimated in step S4 is "0" or less. If the remaining number of uses is "0" or less (YES in step S5), the process proceeds to step S6. If the remaining number of uses is not "0" or less (NO in step S5), the process ends.

In step S6, the estimation unit 23 issues an alarm.

### <Advantageous Effects of Embodiments>

The energy consumed in the dynamic brake resistor R10 during use of the dynamic brake mechanism DB1 is not constant, as explained with reference to FIG. 4. According to the present embodiment, the remaining number of uses of the dynamic brake mechanism DB1 is estimated based on the integrated value Eₘₐₓ of the allowable rotational energy of the dynamic brake resistor R10 and the integrated value Eₛᵤₘ of the energy E₁ that has actually been consumed in the dynamic brake resistor R10 due to the use of the dynamic brake mechanism DB1. Therefore, according to the present embodiment, even if the energy consumed in the dynamic brake resistor R10 during use of the dynamic brake mechanism DB1 is not constant, the remaining number of uses of the dynamic brake mechanism DB1 can be estimated with higher accuracy. Consequently, according to the present embodiment, the dynamic brake mechanism DB1 can be used until the life of the dynamic brake resistor R10 is over. In addition, according to the present embodiment, it is possible to reduce the frequency of replacement of the dynamic brake resistor R10 in the servo driver 2.

In the present embodiment, the energy consumed in the dynamic brake resistor R10 during use of the dynamic brake mechanism DB1 is estimated based on the load inertia and the rotational speed of the motor shaft 317. It is considered that the energy consumed in the dynamic brake resistor R10 during use of the dynamic brake mechanism DB1 varies depending on the load inertia and the rotational speed of the motor shaft 317. According to the present embodiment, the estimation accuracy of the energy consumed in the dynamic brake resistor R10 can be improved.

### <Modified Example>

In the embodiment described above, a certain margin is secured for the allowable number of uses of the dynamic brake mechanism DB1 by using the applied load inertia and the rated rotational speed of the servo motor 3. However, the disclosed technique does not need to secure such a margin. For example, the temperature (element temperature) of the dynamic brake resistor R10 that can be used for the assumed allowable number of uses is acquired with reference to the life curve illustrated in FIG. 3. Subsequently, a temperature rise value (ΔT) of the dynamic brake resistor R10 is defined assuming that the ambient temperature of the dynamic brake resistor R10 is maximized with respect to the acquired element temperature of the dynamic brake resistor R10. In other words, ΔT is obtained by subtracting the ambient temperature from the element temperature. Then, the rotational energy reaching ΔT (corresponding to Eₘₐₓ₁ in Equation (2)) is calculated using the defined ΔT and Equation (2). The calculated rotational energy is multiplied by the assumed allowable number of uses to determine an integrated value Eₘₐₓ of the allowable rotational energy of the dynamic brake resistor R10. Then, the estimation unit 23 may issue an alarm if the remaining number of uses calculated by Equation (5) becomes "0".

In the present embodiment, the remaining number of uses of the dynamic brake mechanism DB1 is estimated by subtracting the deemed use count from the allowable number of uses. However, the remaining number of uses of the dynamic brake mechanism DB1 may be estimated by another method. For example, the remaining allowable energy of the dynamic brake resistor R10 is calculated by subtracting the integrated value Eₛᵤₘ of the energy E₁ consumed in the dynamic brake resistor R10 from the integrated value Eₘₐₓ of the allowable energy of the dynamic brake resistor R10. Subsequently, the integrated value Eₛᵤₘ is divided by the use count of the dynamic brake mechanism DB1, thereby calculating an average value of the energy consumed in the dynamic brake resistor R10 during use of the dynamic brake mechanism DB1. The remaining number of uses of the dynamic brake mechanism DB1 may be calculated by dividing the remaining allowable energy of the dynamic brake resistor R10 by the average value of the energy consumed in the dynamic brake resistor R10. Although the remaining number of uses is calculated using the average value here, the remaining number of uses may be calculated using other statistical values such as a mode value or a median value. By using such a statistical value, the remaining number of uses can be estimated based on the actual result of the energy consumed in the dynamic brake resistor R10 during use of the dynamic brake mechanism DB1 in the past, and thus the estimation accuracy of the remaining number of uses can be improved. The remaining allowable energy of the dynamic brake resistor R10 is an example of a "first value". The average value is an example of a "second value".

The embodiment and modified example disclosed above can be combined.

### <Supplement 1>

A servo driver (2) that controls a servo motor (3) in a servo system (100), the servo driver (2) including:
a dynamic brake (DB1) that stops the servo motor (3) by dissipating, as heat in a resistor (R10), regenerative electric power from the servo motor (3); and
an estimation unit (23) that estimates an energy value (E₁) that will be dissipated as heat in the resistor (R10) during use of the dynamic brake (DB1), and estimates a remaining number of uses (Uᵣ) of the dynamic brake (DB1) based on an accumulated value (Eₛᵤₘ) of the energy value (E₁) dissipated as heat in the resistor (R10) due to use of the dynamic brake (DB1) so far and an allowable energy value (Eₘₐₓ) of the resistor (R10).

### <Supplement 2>

The servo driver (2) according to Supplement 1, wherein the estimation unit estimates the energy value (E₁) that will be dissipated as heat in the resistor based on a load inertia I and a rotational speed (ω) of the servo motor.

### <Supplement 3>

The servo driver according to Supplement 1 or 2, wherein the estimation unit
calculates a first use count as a deemed number of uses of the resistor by dividing the accumulated value by the allowable energy value, and multiplying a resulting value thereof by a maximum allowable number of uses specified for the resistor, and
calculates the remaining number of uses by subtracting the first use count from the maximum allowable number of uses.

### <Supplement 4>

The servo driver (2) according to Supplement 1 or 2, wherein the estimation unit (23)
calculates a first value by subtracting the accumulated value (Eₛᵤₘ) from the allowable energy value (Eₘₐₓ),
   calculates a second value by dividing the accumulated value (Eₛᵤₘ) by a number of uses of the dynamic brake, and
calculates the remaining number of uses (Uᵣ) by dividing the first value by the second value.

### <Supplement 5>

The servo driver according to any one of Supplements 1 to 4, wherein the estimation unit (23) issues an alarm if the remaining number of uses (Uᵣ) is equal to or less than a threshold value.

## Claims

1. A servo driver (2) that controls a servo motor (3) in a servo system (100), the servo driver (2) comprising:
a dynamic brake (DB1) that stops the servo motor (3) by dissipating, as heat in a resistor (R10), regenerative electric power from the servo motor (3); and
an estimation unit (23) that estimates an energy value (E₁) that will be dissipated as heat in the resistor (R10) during use of the dynamic brake (DB1), and estimates a remaining number of uses (Uᵣ) of the dynamic brake (DB1) based on an accumulated value (Eₛᵤₘ) of the energy value (E₁) dissipated as heat in the resistor (R10) due to use of the dynamic brake (DB1) so far and an allowable energy value (E₁) of the resistor (R10).

2. The servo driver (2) according to claim 1, wherein the estimation unit (23) estimates the energy value (E₁) that will be dissipated as heat in the resistor (R10) based on a load inertia (I) and a rotational speed (ω) of the servo motor (3).

3. The servo driver (2) according to claim 1, wherein the estimation unit (23)
calculates a first use count as a deemed number of uses of the resistor (R10) by dividing the accumulated value (Eₛᵤₘ) by the allowable energy value (E₁), and multiplying a resulting value thereof by a maximum allowable number of uses specified for the resistor (R10), and
calculates the remaining number of uses (Uᵣ) by subtracting the first use count from the maximum allowable number of uses.

4. The servo driver (2) according to claim 1, wherein the estimation unit (23)
calculates a first value by subtracting the accumulated value (Eₛᵤₘ) from the allowable energy value (E₁),
calculates a second value by dividing the accumulated value (Eₛᵤₘ) by a number of uses of the dynamic brake (DB1), and
calculates the remaining number of uses (Uᵣ) by dividing the first value by the second value.

5. The servo driver (2) according to any one of claims 1 to 4, wherein the estimation unit (23) issues an alarm if the remaining number of uses (Uᵣ) is equal to or less than a threshold value.
